# EUROPEAN PATENT SPECIFICATION

(11) **EP 2 620 832 B1**
(45) Date of publication and mention of the grant of the patent: **18.05.2022**
(21) Application number: 12382424.5
(22) Date of filing: 31.10.2012
(51) Int. Cl.: G05G 1/44, G05G 1/50, F16B 21/02

(54) **COUPLING DEVICE FOR AT LEAST ONE MOTOR VEHICLE PEDAL**
Kopplungsvorrichtung für mindestens ein Kraftfahrzeugpedal
Dispositif de couplage pour au moins une pédale de véhicule automobile

(30) Priority: 30.11.2011 ES 201131942
(43) Date of publication of application: 31.07.2013
(73) Proprietor: Batz, S.Coop., 48140 Igorre (ES)
(72) Inventor: Burguera Albizuri, Fernando, 48014 BILBAO (ES); Llona Furundarena, Lander, 48196 LEZAMA (ES); Salvador Delgado, Javier, 48960 GALDAKAO (ES); Anzola Artabe, Egoitz, 48004 BILBAO (ES); Arrillaga Elcoro, Peru, 48280 LEQUEITIO (ES); Menique Ezquerra, Jon, 48004 BILBAO (ES)
(74) Representative: Igartua, Ismael

(56) References cited:
- DE-C1- 19 615 487
- FR-A1- 2 796 012
- JP-U- S5 332 268

## Description

### TECHNICAL FIELD

This invention relates to a coupling device for at least one motor vehicle pedal, by means of which the pedal is coupled to a support piece that is itself fixed to the motor vehicle.

### PRIOR ART

There are various known devices for fixing the pedal to a support piece of said pedal. US4819500 describes a pedal that is fixed to the support piece between two substantially parallel walls of said support piece by means of an axis that passes through the pedal. The axis is fixed to the support piece by means of a screwed connection, by a threaded bolt that passes longitudinally through said axis.

For the purpose of obtaining an inexpensive and rapid fitting system, minimising the assembly and detachment operations, ES2273244T3 describes a shaft made of a plastic material, which is inserted axially in the support, passing through the support and the pedal. Once inserted it is rotated in relation to the support to a locking position. To achieve this, the shaft comprises a headstock that includes elastic clips that are locked with the support.

In FR2796012A1, which is considered to represent the closest prior art and discloses the preamble of claim 1, the shaft, made of a plastic material, is fixed to the support by rapid coupling means. The rapid coupling means comprise projections on the outer wall of the support and stoppers on a head of the axis, said stoppers collaborating with the projections respectively to fix and lock the axis in relation to the support.

In the prior art there are known shafts of rotation made solely of plastic, in particular of polyamide or similar plastics, which are very rigid and resistant to cutting. One problem associated with hygroscopic plastics such as polyamide is the changes caused to their shape as a result of the temperature and/or moisture levels to which said materials are subjected. When they reach high temperatures and/or moisture levels axes made of polyamide or similar plastics absorb moisture and become enlarged. As a result, the members that collaborate with the axis are designed with lots of play, which negatively affects the accuracy of the rotary movement of the pedal in relation to the axis, and the effective transmission of stresses towards the support piece.

### BRIEF DISCLOSURE OF THE INVENTION

The object of the invention is to provide a coupling device for at least one pedal of a motor vehicle, as defined in the claims.

The coupling device of the pedal comprises a shaft that passes through the pedal and the support piece, fixing the pedal to the support piece. The shaft comprises a plastic body and a metal tube, arranged substantially coaxially to the body on the exterior of said body. The pedal is arranged supported on the metal tube and the metal tube is itself arranged supported on the support piece.

The metal tube supports most of the mechanical stresses to which the coupling device is subjected while the pedal is operating. In particular, the metal tube supports the shearing and flexion stresses that are caused. As a result, the plastic body may be made of a plastic material whose mechanical requirements, in particular against rigidity and/or cutting, are fewer than those it would need if the axis were made solely of plastic, thereby cutting the cost of material. In addition, the body does not present the hygroscopicity problems known in the prior art for shafts made solely of plastic, which must meet the mechanical requirements demanded of motor vehicle pedals.

The metal tube is combined with the plastic body to provide a coupling device that weighs less than it would if made entirely of a metal material, and is cheaper. Additionally, hygroscopicity problems are avoided by choosing a non-hygroscopic plastic.

In addition, a coupling device with high resistance to overloads is obtained, which is not possible with the plastic shafts known in the prior art.

Furthermore, the metal tube thus maintains a simple shape, while the body may adopt a complex shape given the fact that, as it is made of plastic, manufacturing the body with said shape is much simpler and cheaper than doing so with metal. Reduced tolerances of the coupling device are obtained due to the reduced tolerances that may be obtained in the metal tube, as opposed to in a shaft made exclusively of plastic, in which the tolerances are greater, depending on the injection process. In this way, proper transmission of the rotary movement of the pedal in relation to the shaft is obtained, as well as effective transmission of the loads of the pedal to the support piece through the metal tube, with the plastic body suffering in a minimal manner. These and other advantages and characteristics of the invention will be made evident in the light of the drawings and the detailed description thereof.

### DESCRIPTION OF THE DRAWINGS

Figure 1 shows a view in perspective of a pedal unit that comprises a pedal coupled to a support piece by a coupling device according to the invention.
Figure 2 shows a sectional view of the pedal coupled to the support piece and of a first embodiment of the coupling device shown in Figure 1.
Figure 3 shows a side view of the first embodiment of the coupling device shown in Figure 2.
Figure 4 shows a longitudinal section of the coupling device shown in Figure 3.
Figure 5 shows a side view of a second embodiment of the coupling device shown in Figure 1.
Figure 6 shows a longitudinal section of the coupling device shown in Figure 5.

### DETAILED DISCLOSURE OF THE INVENTION

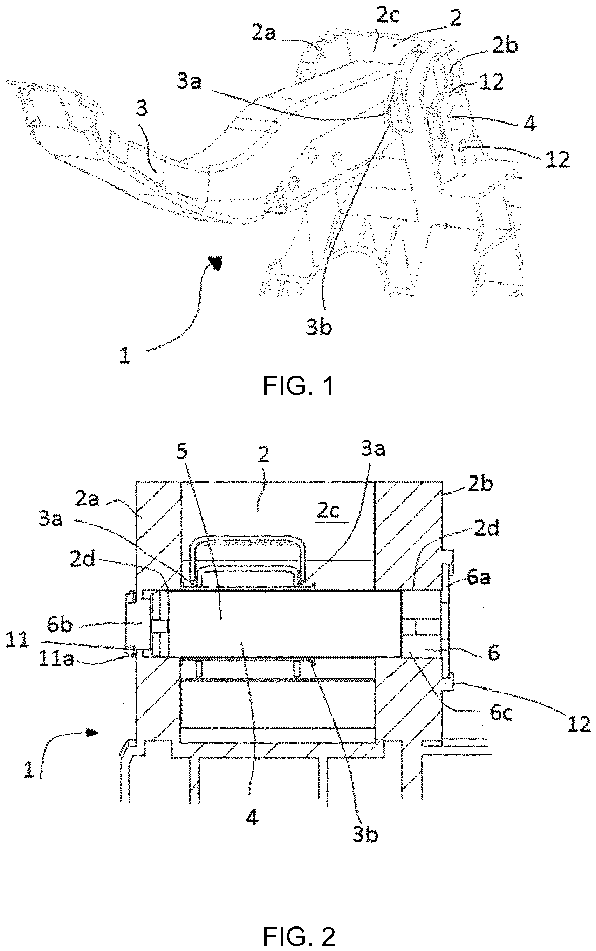

Figure 1 shows a pedal unit 1 that comprises a pedal 3 for motor vehicles that is arranged coupled to a support piece 2 by a coupling device.

The pedal 3 comprises holes 3a that are passed through by a bushing member 3b, the bushing member 3b being arranged fixed to the pedal 3. The support piece 2 comprises walls 2a,2b arranged substantially parallel to each other, which define a housing 2c in which is arranged housed the pedal 3. Each wall 2a,2b comprises a hole 2d, the holes 2d of the walls 2a,2b being arranged substantially coaxially.

The coupling device comprises a shaft 4 that passes through the bushing member 3b of the pedal 3 and the walls 2a,2b of the support piece 2 through the holes 2d, fixing the pedal 3 to the support piece 2.

The shaft 4 comprises a plastic body 6 and a metal tube 5 that surrounds the body 6 externally. The body 6 and the tube 5 are connected. The pedal 3 is arranged coupled to the tube 5, supported on said tube 5, said pedal 3 being capable of rotating in relation to the tube 5. The tube 5 is supported on the walls 2a,2b, it being supported on delimiting surfaces of the respective holes 2d. As a result, the load/tensions of the pedal 3 are transmitted to the tube 5, which itself transmits them to the support piece 2. The body 6 positions the shaft 4 in relation to the support piece 2, participating minimally in the transmission of forces.

The tube 5 shown in the embodiments is made of steel. In other embodiments not shown in the figures, the tube 5 may be made of any other metal.

In the embodiments shown the body 6 is made of a non-hygroscopic plastic, for example polyethylene, polyoxymethylene or polypropylene, with or without fibre. As a result, the additional advantage is achieved of using plastics that are not deformed perceptibly if high temperatures or moisture levels are reached.

The body 6 comprises a central part 6c that extends longitudinally along the tube 5, it being arranged in contact with the tube 5, a head 6a that extends continuous to the central part 6c, and an end 6b that extends continuous to the central part 6c in a direction opposite to the head 6. The head 6a and the end 6b project out in relation to the tube 5. The body 6 is substantially cylindrical and hollow.

Furthermore, the shaft 4 comprises fixing means arranged on the body 6 to prevent the axial movements of the shaft 4 in relation to the support piece 2. The fixing means 10 comprise at least one projection 11 that projects out radially from an external surface of the end 6b and the head 6a.

In the embodiments shown in the figures, the fixing means comprise two projections 11 arranged diametrically to each other. The end 6b of the body 6 passes through the walls 2a,2b of the support piece 2 through the corresponding holes 2d, each wall 2a,2b including recesses not shown in the figures, which extend continuous to each hole 2c, radially towards the exterior, to allow the passage of the projections 11 of the body 6. Each projection 11 comprises a substantially flat surface 11a, substantially orthogonal to the body 6 and arranged facing the head 6a. Once the shafts 4 as has been fitted in the support piece 2, the head 6a, greater in size than the holes 2d of the support piece 2, and the projections 11 are arranged externally to the support piece 2, with the result that the surface 11a of the respective projection 11 comes up against one of the walls 2a of the support piece 2 and the head 6a against the other wall 2b of the support piece 2.

Additionally, the coupling device comprises locking means that cooperate with the support piece 2 to lock the rotation of the axis 4 in relation to the support piece 2, preventing its release. The locking means 12 comprise housings 14 in the body 6, each one of each which collaborates with a respective tab 13 to lock the shaft 4 in the support piece 2.

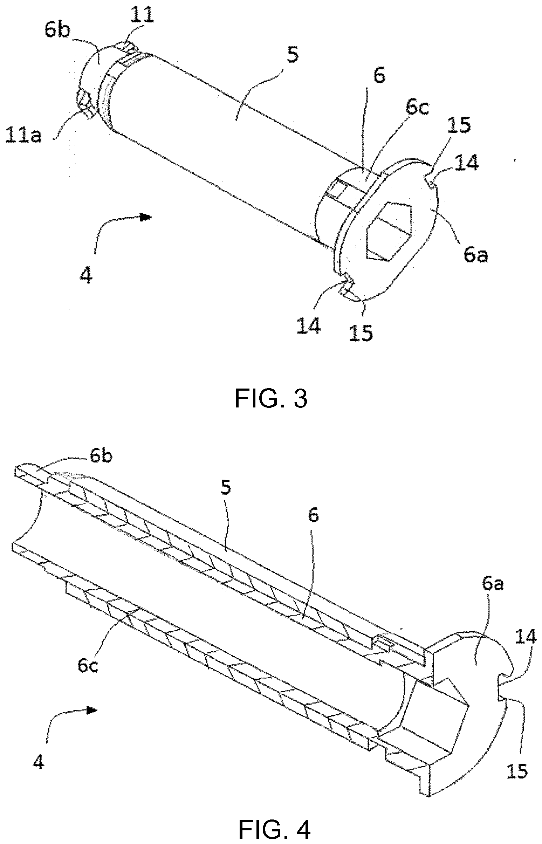

In the first embodiment of the coupling device, shown in Figures 1 and 2, the body 6 comprises two housings 14, shown in Figures 3 to 6, arranged diametrically opposing on the perimeter of the headstock 6a. The housings 14 pass longitudinally through the head 6a. In addition, each housing 14 is delimited by a limiting surface 15 that projects out radially in relation to the rest of the delimiting surfaces of the housing 14. The limiting surfaces 15 are substantially flat. For their part, the support piece 2 comprises two tabs 13 arranged facing each other, diametrically opposing on the perimeter of the hole 2d of the wall 2b.

The housings 14 are arranged in such a way that when the shaft 4 is inserted in the support piece 2 through the holes 2d, the shaft 4 is rotated until the limiting surface 15 of the corresponding housing 14 comes up against the tab 13 of the corresponding support piece 2, the tabs 13 being housed in said position at least partly in the respective housings 14 of the body 6, locking the shaft 4. To release the shaft 4 said shaft 4 merely has to be rotated in an opposite direction.

In a first embodiment of the coupling device, shown in Figures 1 to 4, the body 6 is arranged over-injected inside the tube 5. The over-injection is performed by means known in the prior art, and a description is not considered necessary therefore. The central part 6c projects out in relation to the tube 5 in both directions.

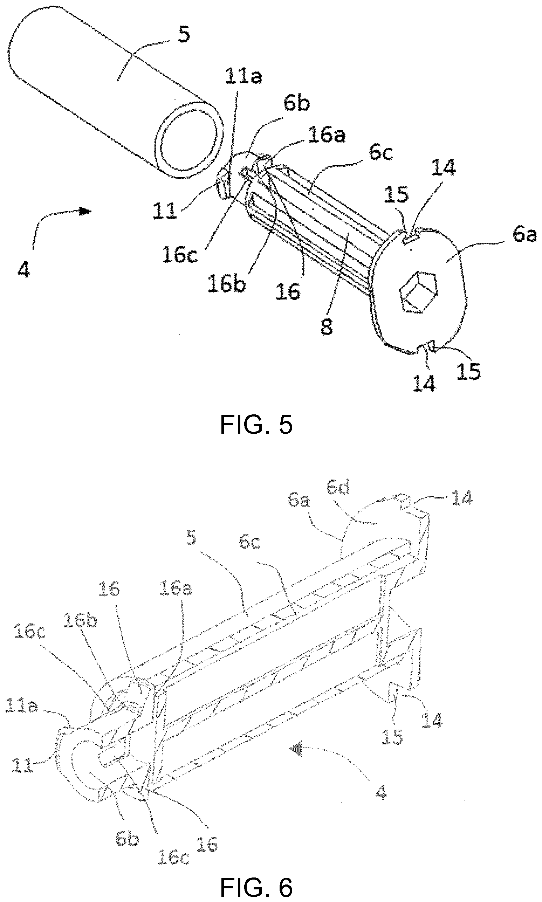

A second embodiment of the coupling device is shown in Figures 4 and 5. The members of the coupling device common to both embodiments have been numbered using the same numerical reference. In the second embodiment, the body 6 is formed in plastic injected separately to the tube 5. The tube 5 is then inserted tightly to the body 6. The tube 5 is arranged coaxially and externally to the body 6.

In this second embodiment, the body 6, as in the preceding embodiment, is cylindrical and hollow. The body 6 comprises the central part 6c, the head 6a that extends continuous to the central part 6c, and the end 6b that extends continuous and opposite the head 6a.

Both the means of fixing and the means of locking the shaft 4 to the support piece 2 are similar to the fixing and locking means described for the first embodiment, and will not therefore be described again.

The body 6 also comprises in the central part 6c gaps 8 that extend longitudinally along the central part 6c, substantially parallel to each other, along the contour of the central part 6c. The gaps 8 allow the body 6 to be injected in a simpler way than in the first embodiment, in which the fact that the metal tube 5 has to be over-injected internally conditions the process.

Additionally, in order to fix the tube 5 in relation to the body 6, the body 6 comprises a retention member 16 arranged on one end of the central part 6c. The retention member 16 extends radially, towards the exterior of the body 6. The retention member 16 comprises a substantially flat surface 16a that is arranged facing a base 6d of the headstock 6a, with the result that when it is inserted the tube 5 is arranged supported and retained between the base 6d and the surface 16a of the retention member 16.

The retention member 16 is flexible, comprises a recess 16b on a face opposite the support surface 16a of the tube 5, the recess 16b being arranged in the area of connection of the retention member 16 to the end 6b of the body 6, as a result of which the retention member 16 may bend in relation to said recess 16b to allow the insertion of the tube 5. In addition, the end 6b comprises cavities 16c that pass through the body 6, arranged continuous to the retention member 16, which allows the retention member 16 to be flexible and to bend. In the embodiment shown in Figures 5 and 6, the end 6b comprises two cavities 16c, substantially parallel to each other and oriented axially, the retention member 16 being arranged between both cavities 16c.

Finally, although in the embodiments shown the pedal unit 1 comprises a pedal 3, in other embodiments not shown in the figures the pedal unit 1 may comprise more pedals, for example, the brake, accelerator and clutch, with the coupling device including a continuous axis, with the characteristics described throughout the document, and with different dimensions adapted to the needs of each pedal.

## Claims

1. Pedal unit of a motor vehicle comprising a pedal (3), a support piece (2), and a coupling device comprising a rotation shaft (4) that passes through the pedal (3), coupling the pedal (3) to the support piece (2), the rotation shaft (4) comprising a plastic body (6), the body (6) being substantially cylindrical and comprising a central part (6c), a head (6a) that extends continuous to the central part (6c), it being arranged at least partly external to the support piece (2), and an end (6b) that extends continuous to the central part (6c) in a direction opposite to the head (6a), it being arranged at least partly external to the support piece (2), **characterised in that** the plastic body (6) is made of a non-hygroscopic plastic body (6) and **in that** the rotation shaft (4) further comprises a metal tube (5) arranged substantially coaxial to the body (6) on the exterior of said body (6), the central part (6c) of the body (6) extending longitudinally along the tube (5), it being arranged in contact with the tube (5), the pedal (3) being arranged supported on the tube (5) and the tube (5) supported on the support piece (2),

2. Pedal unit according to the preceding claim, wherein the support piece (2) comprises walls (2a,2b), each one of which comprises a hole (2d) that is passed through by the coupling device, the tube (5) being arranged supported on both holes (2d).

3. Pedal unit according to any of the preceding claims, wherein the body (6) and the tube (5) are connected.

4. Pedal unit according to any of the preceding claims, wherein it comprises fixing means (10) in the body (6), which cooperate with the support piece (2), preventing an axial displacement of the shaft (4) in relation to the support piece (2).

5. Pedal unit according to the preceding claim, wherein the fixing means (10) comprise at least one projection (11) that extends radially from the end (6b) of the body (6) and the head (6a), with the result that the projection (11) and the head (6a) come up against the corresponding wall (2a,2b) of the support piece (2).

6. Pedal unit according to any of preceding claims, wherein it comprises locking means (12) in the head (6a) of the body (6), which cooperate with the support piece (2), locking the rotation of the shaft (4).

7. Pedal unit according to the preceding claim, wherein the locking means (12) comprise at least one housing (14) in the head (6a), delimited by a limiting surface (15) that projects out radially, cooperating with a tab (13) arranged on the corresponding wall (2a,2b) of the support piece (2) to lock the rotation, the tab (13) being arranged at least partly housed in the housing (14).

8. Pedal unit according to the preceding claim, wherein the locking means (12) comprise two housings (14) arranged opposite to each other, each one of which cooperates with the corresponding tab (13) comprise in the support piece (2).

9. Pedal unit according to any of the preceding claims, wherein the body (6) is over-injected internally to the tube (5).

10. Pedal unit according to any of claims 1 to 8, wherein the tube (5) is arranged inserted tightly externally to the body (6).

## Patentansprüche

1. Pedaleinheit eines Kraftfahrzeugs umfassend ein Pedal (3), ein Stützteil (2) und eine Kopplungsvorrichtung, welche eine Rotationswelle (4) umfasst, welche durch das Pedal (3) durchgeht und das Pedal (3) mit dem Stützteil (2) koppelt, wobei die Rotationswelle (4) einen Kunststoffkörper (6) umfasst, wobei der Körper (6) im Wesentlichen zylindrisch ist und einen Kopf (6a), welcher sich durchgehend bis zum Mittelteil (6c) erstreckt, sodass er mindestens teilweise außerhalb des Stützteils (2) angeordnet ist, und ein Ende (6b), welches sich durchgehend bis zum Mittelteil (6c) in einer dem Kopf (6a) entgegengesetzten Richtung erstreckt, sodass es mindestens teilweise außerhalb des Stützteils (2) angeordnet ist, umfasst, **dadurch gekennzeichnet, dass** der Kunststoffkörper (6) aus einem nicht hygroskopischen Kunststoff hergestellt ist und **dass** die Rotationswelle (4) zusätzlich ein Metallrohr (5) umfasst, welches im Wesentlichen koaxial zum Körper (6) an der Außenseite des genannten Kunststoffkörpers (6) angeordnet ist, wobei der Körper (6) einen Mittelteil (6c) umfasst, welcher sich längs entlang des Rohrs (5) erstreckt, sodass er in Kontakt mit dem Rohr (5) angeordnet ist, wobei das Pedal (3) auf dem Rohr (5) gestützt und das Rohr (5) auf dem Stützteil (2) gestützt angeordnet sind.

2. Pedaleinheit nach dem vorhergehenden Anspruch, wobei das Stützteil (2) Wände (2a, 2b) umfasst, von denen jede ein Loch (2d) umfasst, durch welches die Kopplungsvorrichtung durchgeht, wobei das Rohr (5) auf beiden Löchern (2d) gestützt angeordnet ist.

3. Pedaleinheit nach einem der vorhergehenden Ansprüche, wobei der Körper (6) und das Rohr (5) verbunden sind.

4. Pedaleinheit nach einem der vorhergehenden Ansprüche, wobei sie Fixiermittel (10) im Körper (6) umfasst, welche mit dem Stützteil (2) zusammenwirken, sodass eine Axialverschiebung der Welle (4) in Bezug auf das Stützteil (2) verhindert wird.

5. Pedaleinheit nach dem vorhergehenden Anspruch, wobei die Fixiermittel (10) mindestens einen Vorsprung (11), welcher sich radial vom Ende (6b) des Körpers (6) erstreckt, und den Kopf (6a) umfassen, mit dem Ergebnis, dass der Vorsprung (11) und der Kopf (6a) auf die entsprechende Wand (2a, 2b) des Stützteils (2) stoßen.

6. Pedaleinheit nach einem der vorhergehenden Ansprüche, wobei sie Sperrmittel (12) im Kopf (6a) des Körpers (6) umfasst, welche mit dem Stützteil (2) zusammenwirken, sodass die Rotation der Welle (4) gesperrt wird.

7. Pedaleinheit nach dem vorhergehenden Anspruch, wobei die Sperrmittel (12) mindestens eine Aufnahme (14) im Kopf (6a) umfassen, welches von einer Begrenzungsfläche (15), welche radial hervorsteht, begrenzt wird, zusammenwirkend mit einer Lasche (13), welche auf der entsprechenden Wand (2a, 2b) des Stützteils (2) angeordnet ist, um die Rotation zu sperren, wobei die Lasche (13) mindestens teilweise in der Aufnahme (14) aufgenommen angeordnet ist.

8. Pedaleinheit nach dem vorhergehenden Anspruch, wobei die Sperrmittel (12) zwei Aufnahmen (14) umfassen, welche gegenüberliegend angeordnet sind, von denen jede mit der entsprechenden, im Stützteil (2) umfassten Lasche (13) zusammenwirkt.

9. Pedaleinheit nach einem der vorhergehenden Ansprüche, wobei der Körper (6) innerlich dem Rohr (5) überspritzt wird.

10. Pedaleinheit nach einem der Ansprüche 1 bis 8, wobei das Rohr (5) äußerlich dem Körper (6) eng eingesetzt angeordnet ist.

## Revendications

1. Unité de pédale d'un véhicule automobile qui comprend une pédale (3), une pièce de support (2) et un dispositif d'accouplement qui comprend un arbre de rotation (4) qui passe à travers la pédale (3), qui accouple la pédale (3) à la pièce de support (2), l'arbre de rotation (4) comprenant un corps en plastique (6), le corps (6) étant sensiblement cylindrique et comprenant une tête (6a) qui s'étend de manière continue jusqu'à la partie centrale (6c), qui est disposée de manière au moins partiellement externe à la pièce de support (2) et une extrémité (6b) qui s'étend de manière continue jusqu'à la partie centrale (6c) dans un sens opposé à la tête (6a), qui est disposée de manière au moins partiellement externe à la pièce de support (2), **caractérisée en ce que** le corps en plastique (6) est réalisé dans un matériau en plastique non hygroscopique et **en ce que** l'arbre de rotation (4) comprend en plus un tube de métal (5) disposé de manière sensiblement coaxiale au corps (6) sur l'extérieur dudit corps en plastique (6), le corps (6) comprenant une partie centrale (6c) qui s'étend longitudinalement le long du tube (5), qui est disposée en contact avec le tube (5), la pédale (3) étant disposée supportée sur le tube (5) et le tube (5) supporté sur la pièce de support (2).

2. Unité de pédale selon la revendication précédente, dans laquelle la pièce de support (2) comprend des parois (2a, 2b), chacune desquelles comprend un orifice (2d) qui est traversé par le dispositif d'accouplement, le tube (5) étant disposé supporté sur les deux orifices (2d).

3. Unité de pédale selon l'une quelconque des revendications précédentes, dans laquelle le corps (6) et le tube (5) sont connectés.

4. Unité de pédale selon l'une quelconque des revendications précédentes, qui comprend des moyens de fixation (10) sur le corps (6), qui agissent conjointement avec la pièce de support (2), empêchant un déplacement axial de l'arbre (4) par rapport à la pièce de support (2).

5. Unité de pédale selon la revendication précédente, dans laquelle les moyens de fixation (10) comprennent au moins une protubérance (11) qui s'étend radialement depuis l'extrémité (6b) du corps (6) et de la tête (6a), avec pour résultat que la protubérance (11) et la tête (6a) arrivent contre la paroi (2a, 2b) correspondante de la pièce de support (2).

6. Unité de pédale selon l'une quelconque des revendications précédentes, qui comprend des moyens de blocage (12) sur la tête (6a) du corps (6), qui agissent conjointement avec la pièce de support (2), bloquant la rotation de l'arbre (4).

7. Unité de pédale selon la revendication précédente, dans laquelle les moyens de blocage (12) comprennent au moins un logement (14) sur la tête (6a), délimité par une surface de limitation (15) qui ressort radialement vers l'extérieur, qui agit conjointement avec un onglet (13) disposé dans la paroi (2a, 2b) correspondante de la pièce de support (2) pour bloquer la rotation, l'onglet (13) étant disposé au moins partiellement logé dans le logement (14).

8. Unité de pédale selon la revendication précédente, dans laquelle les moyens de blocage (12) comprennent deux logements (14) disposés opposés entre eux, chacun desquels agit conjointement avec l'onglet (13) correspondant compris dans la pièce de support (2).

9. Unité de pédale selon l'une quelconque des revendications précédentes, dans laquelle le corps (6) est surinjecté de manière interne au tube (5).

10. Unité de pédale selon l'une quelconque des revendications 1 à 8, dans laquelle le tube (5) est disposé inséré ajusté de manière externe au corps (6).
